(19) Europäisches Patentamt

European Patent Office

Office européen des brevets

(11) **EP 0 712 427 B1**

(12) **FASCICULE DE BREVET EUROPEEN**

(45) Date de publication et mention
de la délivrance du brevet:
**17.05.2000 Bulletin 2000/20**

(21) Numéro de dépôt: **95905515.3**

(22) Date de dépôt: **24.01.1995**

(51) Int. Cl.[7]: **C08L 1/10**, D01F 2/00,
D01F 2/28, C08J 5/18,
B60C 9/00

(86) Numéro de dépôt international:
**PCT/CH95/00014**

(87) Numéro de publication internationale:
**WO 95/20629 (03.08.1995 Gazette 1995/33)**

(54) **COMPOSITION CONTENANT DU FORMIATE DE CELLULOSE ET POUVANT FORMER UN GEL ELASTIQUE ET THERMOREVERSIBLE**

ZUSAMMENSETZUNG ENTHALTEND CELLULOSEFORMIAT, DAS FÄHIG IST EIN ELASTISCHES UND THERMORERVERSIBLES GEL ZU BILDEN

CELLULOSE FORMATE CONTAINING COMPOSITION FOR FORMING A RESILIENT HEAT-CONVERTIBLE GEL

(84) Etats contractants désignés:
**AT BE CH DE ES FR GB IT LI LU NL SE**

(30) Priorité: **26.01.1994 FR 9401098**

(43) Date de publication de la demande:
**22.05.1996 Bulletin 1996/21**

(73) Titulaire:
**MICHELIN RECHERCHE ET TECHNIQUE S.A.**
**CH-1763 Granges-Paccot (CH)**

(72) Inventeurs:
• **HUSTON, Rima**
  **CH-8057 Zurich (CH)**
• **ESNAULT, Philippe**
  **CH-8050 Zurich (CH)**
• **MERALDI, Jean-Paul**
  **CH-8049 Zurich (CH)**

(74) Mandataire: **Hiebel, Robert**
**Michelin & Cie,**
**Service SGD/LG/PI Ladoux**
**63040 Clermont-Ferrand Cedex 01 (FR)**

(56) Documents cités:
**EP-A- 0 220 642**          **WO-A-85/05115**
**WO-A-91/16357**          **WO-A-94/17136**
**US-A- 5 047 180**

• ANGEWANDTE MAKROMOLEKULARE
  CHEMIE., vol.198, no.3451, 1992, BASEL CH
  pages 155 - 164 M.SCHNABELRAUCH ET AL.
  'Readely hydrolyzable cellulose esters as
  intermediates for the regioselective
  derivatization of cellulose'
• JOURNAL OF POLYMER SCIENCE, POLYMER
  LETTERS EDITION, vol.24, 1986, NEW YORK US
  pages 495 - 501 T. FUTJIMOTO ET AL 'Reaction
  of cellulose with formic acid and stability of
  cellulose formate'

**Description**

L'invention concerne les compositions pour obtenir des articles en cellulose régénérée, notamment des fibres ou des films, les procédés pour obtenir ces articles, ainsi que les fibres cellulosiques elles-mêmes.

On connaît depuis très longtemps la réalisation de fibres de viscose et de rayonne par un procédé au mouillé dans lequel la formation de la fibre dans le bain de coagulation est assurée par une coagulation résultant de l'action déshydratante d'une solution d'électrolytes et de l'extraction du solvant (voir par exemple "Cellulose chemistry and its applications", Ed. T.P. Nevell et S.H. Zeronian, Ellis Horwood Limited, 1985, chap. 18, et "Physics and chemistry of cellulose fibers" de P.H. Hermans, Elsevier, 1949, 3ème partie). Ce procédé met en oeuvre une succession d'étapes complexes présentant des caractéristiques importantes de pollution.

Divers procédés ont été décrits pour tenter de remédier à cet inconvénient de pollution et nous les résumons ci-dessous.

On a proposé de dissoudre directement la cellulose dans des amines tertiaires N-oxydes, notamment le N-oxyde de N-méthylmorpholine, comme décrit par exemple dans les brevets US-A-4 416 698, US-A-4 734 239, DD 298 653. Ces solvants ont la caractéristique de se décomposer facilement en donnant des peroxydes qui peuvent conduire à des explosions et provoquer la dégradation de la cellulose. D'autre part, les fibres issues de ce procédé présentent une tendance marquée à la fibrillation.

Il est connu de préparer des fibres de cellulose par dissolution de cellulose dans un mélange de N,N-diméthylacétamide (DMAC) et de LiCl, comme décrit par exemple dans le brevet US-A-4 302 252 et dans la demande de brevet européen EP-A-178 293, mais ce procédé nécessite une activation préalable de la cellulose.

Les demandes de brevets japonais JP-A-60/199 912 et JP-A-60/209 006 décrivent la réalisation de fibres en utilisant des solutions de cellulose dans des solvants organiques contenant des composés halogénés de tétraalkylammonium. Ce procédé ne permet pas de dépasser une concentration en poids de 6 % en cellulose dissoute.

La demande de brevet WO-A-85/05115, et les brevets équivalents EP-B-179822, US-A-4 839 113, décrivent la réalisation de fibres en formiate de cellulose à partir de solutions anisotropes de formiate de cellulose dans de l'acide formique et de l'acide phosphorique cristallin à 99 %, ces fibres pouvant être régénérées. Le procédé pour l'obtention des fibres n'est pas polluant et les fibres en cellulose régénérée ainsi obtenues se caractérisent par des propriétés mécaniques très élevées, en particulier le module initial et la ténacité ont des valeurs importantes. Cependant les fibres ainsi obtenues ont une structure très ordonnée, une morphologie particulière qui reflètent le caractère anisotrope des solutions de départ, et qui les rend impropres à une utilisation textile.

La demande de brevet WO-A-94/17136 décrit des fibres en cellulose régénérée qui sont obtenues à partir de solutions isotropes de formiate de cellulose dans des solvants appropriés. Le procédé décrit dans cette demande n'est pas polluant, et il est très souple puisqu'il permet d'obtenir à la fois des fibres dites "techniques" (type rayonne) et des fibres dites "textiles" (type viscose). Les fibres obtenues se caractérisent notamment par une structure moins ordonnée, une morphologie présentant une plus grande continuité en direction transversale, comparées aux fibres décrites dans la demande WO-A-85/05115 précitée. Elles présentent cependant des valeurs d'allongement à la rupture qui restent modérées dans la majorité des cas, ce qui peut se révéler gênant pour certaines applications, en particulier pour des applications textiles.

L'invention a notamment pour but de remédier aux inconvénients précités ou de limiter ces inconvénients en proposant une composition comportant un dérivé cellulosique, un procédé pour obtenir des articles en cellulose régénérée, notamment des fibres ou des films, à partir de ladite composition, ainsi qu'une fibre en cellulose régénérée.

La composition conforme à l'invention est telle qu'énoncée dans la revendication 1

Le procédé conforme à l'invention pour préparer un article en cellulose régénérée est caractérisé par les points suivants:

a) on transforme la composition précédemment définie en un objet liquide ayant la forme de l'article désiré, à une température telle que la composition est une solution;

b) on effectue une trempe thermique dudit objet liquide, par refroidissement rapide de la solution dans un milieu de gélification dont la température est inférieure à $T_f$, de façon à obtenir un gel élastique et thermoréversible;

c) on lave l'article sous forme dudit gel pour enlever la totalité ou la majeure partie du système solvant;

d) on régénère la cellulose de l'article;

e) on lave et on sèche l'article ainsi régénéré.

Le procédé conforme à l'invention est notamment utilisé pour obtenir une fibre ou un film par transformation de la composition, notamment par extrusion, lors de l'étape a) ci-dessus, en un objet liquide ayant la forme d'une fibre ou d'un film.

La fibre en cellulose régénérée conforme à l'invention, constituée d'au moins un filament, est caractérisée en ce qu'elle a les propriétés suivantes:

a) le degré de substitution de la cellulose en groupes formiate, noté $DS_f$ et exprimé en %, vérifie la relation suivante: $0 < DS_f < 5$;

b) le filament a, en section transversale, une morphologie pratiquement continue de la périphérie jusqu'au coeur;

c) le filament ne fibrille pas,

d) la fibre a un module initial au moins égal à 500 cN/tex, un allongement à la rupture au moins égal à 5 % et une ténacité au moins égale à 15 cN/tex.

La fibre conforme à l'invention est notamment une fibre monofilamentaire dont le diamètre est supérieur à 40 μm et dont le titre est supérieur à 2,0 tex.

L'invention concerne également les articles en cellulose régénérée, notamment les fibres et les films, obtenus avec le procédé conforme à l'invention, ainsi que les assemblages comportant au moins une fibre et/ou un film conformes à l'invention, de tels assemblages pouvant être par exemple des câbles, par exemple des câbles de monofilaments, des retors ou des fibres multifilamentaires tordues sur elles-mêmes, de tels articles, assemblages pouvant être par exemple hybrides, composites, c'est-à-dire comportant des éléments de nature différente, éventuellement non conformes à l'invention.

Les articles et/ou les assemblages conformes à l'invention peuvent être utilisés notamment dans l'emballage (par exemple dans le domaine agroalimentaire), dans l'industrie textile, ou encore comme renforts techniques, par exemple pour renforcer des articles en caoutchouc ou en matières plastiques, en particulier des courroies, des tuyaux, des enveloppes de pneumatiques, l'invention concernant également ces articles renforcés

Avantageusement:

- le constituant solvant aprotique est choisi dans le groupe (I) formé par les alkylsulfoxydes, les lactames, les amides acycliques, les dérivés cycliques de l'urée substitués par le méthyle sur l'azote, les lactames et les amides acycliques pouvant être, ou non, substitués, et

- le constituant non solvant est choisi dans le groupe (II) formé par l'eau et les alcools.

Les composés du groupe (I) sont par exemple la γ -pyrrolidone, la N-méthylpyrrolidone, la N-éthylpyrrolidone, le diméthylsulfoxyde,le tétraméthylènesulfoxyde, le N,N-diméthylformamide, le N,N-diméthylacétamide, la N-formylmorpholine, la N-formylpyrrolidine, le ε - caprolactame, le N-méthylcaprolactame, le N-méthylvalérolactame, le N-méthylformamide, la 1,3-diméthyl-2-imidazolidinone, la 1,3-diméthyl-3,4,5,6-tétrahydro-2-pyrimidinone. On utilise de préférence le diméthylsulfoxyde.

Les alcools du groupe (II) peuvent être monofonctionnels ou polyfonctionnels (comportant au moins deux fonctions), composés de préférence de 2 à 7 carbones dans la chaîne principale. Sont préférés, le glycérol, l'éthylèneglycol, le propylèneglycol.

L'invention sera aisément comprise à l'aide des exemples non limitatifs qui suivent et de la figure unique qui montre les courbes force-allongement de gels obtenus avec des compositions conformes à l'invention.

**I. Mesures et tests utilisés**

1. Mesures effectuées sur le formiate de cellulose de départ

1.1 Degré de polymérisation de la cellulose sous forme de formiate de cellulose de départ

On régénère la cellulose de ce dérivé cellulosique en traitant ce dérivé à reflux avec de la soude normale. On lave à l'eau la cellulose obtenue, on la sèche et on mesure le degré de polymérisation (noté DP) comme suit.

On détermine la viscosité inhérente IV de la matière cellulosique selon la norme suisse SNV 195 598 de 1970, mais à différentes concentrations qui varient entre 0,5 et 0,05 g/dl. La viscosité inhérente est définie par l'équation

$$IV = (1/C) \times Ln(t/t_0)$$

dans laquelle C représente la concentration en matière cellulosique sèche, "t" représente la durée d'écoulement de la solution diluée de polymère, $t_0$ représente la durée d'écoulement du solvant pur, dans un viscosimètre de type Ubbelhode, et Ln représente le logarithme népérien, les mesures étant réalisées à 20°C.

La viscosité intrinsèque [η] est donnée par extrapolation à concentration nulle de la viscosité inhérente IV.

La masse moléculaire moyenne en poids $M_w$ est donnée par la relation de Mark-Houwink: $[\eta] = K M_w \alpha$ où les constantes K et α sont respectivement $K = 5,31 \times 10^{-4}$ ; $\alpha = 0,78$, ces constantes correspondant au système de solvant utilisé pour la détermination de la viscosité inhérente.

Ces valeurs sont données par L. Valtasaari dans le document Tappi 48, 627 (1965).

Le degré de polymérisation (DP) est défini par la formule:

$$DP = (M_w)/162,$$

162 étant la masse moléculaire du motif élémentaire de la cellulose.

<u>1.2 Degré de substitution du formiate de cellulose de départ (degré de formylation)</u>

On pèse avec précision 400 mg de formiate de cellulose, on les introduit dans un erlenmeyer. On ajoute 50 ml d'eau et 4 ml de soude normale (NaOH 1 N). On chauffe à 100°C à reflux pendant 1/2 heure sous azote ; on régénère ainsi la cellulose du formiate. Après refroidissement, la soude en excès est titrée en retour avec une solution d'acide chlorhydrique décinormale (HCl 0,1 N).

Le degré de substitution (noté DS) déterminé par cette méthode donne le pourcentage total du nombre de fonctions alcool de la cellulose qui ont été estérifiées, c'est-à-dire que DS = 100 % lorsque les trois fonctions alcool du motif de la cellulose sont estérifiées, et DS = 30 % lorsque 0,9 fonction alcool est estérifiée.

Le DS ainsi déterminé donne donc directement le pourcentage de fonctions alcool de la cellulose qui ont été transformées en groupes formiate.

2. <u>Mesures effectuées sur la composition</u>

<u>2.1. Mesure de $T_f$(température de fusion du gel)</u>

Environ 5 g de la composition sous forme d'une solution ayant une temperature de 100 à 130°C, sont versés directement dans un tube en verre de dimensions 20 mm x 10 cm, ce tube étant à température ambiante. La solution gélifie en se refroidissant à la température ambiante en épousant la forme du tube. On ferme le tube en verre et on le place, retourné, dans un bain d'huile thermostaté. On chauffe le bain d'huile de façon que sa température augmente de 2°C par minute. La température à laquelle l'échantillon de gel commence à glisser dans le tube, sous l'effet de la fusion du gel à la paroi du tube, est notée par définition comme la température de fusion, $T_f$, du gel. La précision de la mesure est de l'ordre de $\pm 3$°C. Après fusion complète, la composition peut être à nouveau gélifiée en la refroidissant à une température notablement inférieure à $T_f$, par exemple à une température inférieure d'environ 50°C à la température $T_f$, c'est-à-dire que le gel est thermoréversible.

<u>2.2. Propriétés mécaniques du gel</u>

On fait couler la composition sous forme d'une solution, ayant une température de 100 à 130°C, dans un moule qui est à la température ambiante. La quantité versée est excédentaire par rapport à la quantité nécessaire pour remplir le moule. Le moule est en acier inoxydable. Ses dimensions intérieures sont de 150 x 150 x 2,5 mm et ses dimensions extérieures sont de 180 x 180 x 7,0 mm.

On applique immédiatement sur le moule un couvercle (plaque en acier inoxydable de 180 x 180 x 5 mm), ce qui permet d'évacuer par pression la solution excédentaire. Des entailles sont ménagées sur les côtés du moule pour faciliter l'évacuation de la solution excédentaire.

Le moule ainsi recouvert est ensuite immédiatement placé sous une presse a température ambiante. Une charge de 5 kN est appliquée sur le moule pour permettre d'évacuer le reste de solution excédentaire et amène au contact le couvercle et les bords du moule.

Le moule est laissé sous charge à température ambiante pendant 24 heures. Pendant cette phase de refroidissement, la solution gélifie. Au bout de ces 24 heures, on obtient, par simple démoulage, une plaque de gel d'épaisseur moyenne 2,5 mm. L'épaisseur de cette plaque est mesurée au 1/10ème de mm.

Des éprouvettes de traction sont ensuite découpées dans cette plaque de gel à l'aide d'un emporte-pièce appelé emporte-pièce d'éprouvette dite Scott.

L'emporte-pièce d'éprouvette Scott est de longueur totale 127 $\pm$ 0,01 mm et de largeur maximale 22,7 $\pm$ 0,05 mm. L'emporte-pièce possède une partie centrale étroite de longueur 25,4 mm et de largeur constante 3,18 $\pm$ 0,03 mm. On réalise ainsi de 5 à 6 éprouvettes par plaque.

Les éprouvettes de gel ainsi obtenues sont ensuite tractionnées jusqu'à la rupture sur une machine Zwick Gmbh & Co (Allemagne) de type 1445 dans les conditions suivantes : pinces pneumatiques à mors plats (dimensions de 38 x 50,5 mm) contrôlées par une pression de 5 bar ; cellule de 1 kN ; longueur entre les pinces de 80 mm ; vitesse de traction de 500 mm/min ; température de 20°C; degré d'humidité de 65 %. L'éprouvette de gel est positionnée dans les pinces sous une prétension d'environ 5 à 20 cN, la partie étroite de l'éprouvette étant centrée par rapport à la distance entre les pinces.

Dans ces conditions, on obtient une courbe force-allongement qui est caractéristique de la composition dans sa phase gel. La force est mesurée en newton et l'allongement en %. La précision, en absolu, sur les valeurs des forces à la rupture obtenues est en moyenne de l'ordre de $\pm$ 6 N et sur les valeurs d'allongement à la rupture , elle est en moyenne de l'ordre de $\pm$ 12 %. La contrainte à la rupture nominale de l'éprouvette de gel est ensuite calculée à partir de la valeur moyenne de la force à la rupture mesurée (moyenne de 5 mesures) et de la valeur moyenne de la section de la partie étroite de l'éprouvette au repos. Cette section est définie comme le produit de la largeur de la partie centrale de l'emporte pièce, soit 3,18 mm et de la valeur moyenne de l'épaisseur de la plaque de gel mesurée après démoulage (moyenne sur 6 mesures en mm). La valeur de la contrainte à la rupture nominale est donnée en MPa.

2.3 Degré de substitution du formiate de cellulose dans la composition

La composition, à l'état de solution, est refroidie à température ambiante, et ainsi transformée en gel. On extrait le système solvant du gel par lavage à l'eau, à la température ambiante, dans un appareil à disperser. Après filtration et nouveau lavage avec de l'acétone, on obtient une poudre qui est ensuite séchée dans une étuve sous vide à 40°C, pendant au moins 30 minutes.

On pèse avec précision 200 mg de formiate de cellulose ainsi obtenu, on les introduit dans un erlenmeyer. On ajoute 40 ml d'eau et 2 ml de soude normale (NaOH 1 N). On chauffe à 90°C à reflux pendant 15 minutes sous azote. On régénère ainsi la cellulose du formiate. Après refroidissement, la soude en excès est titrée en retour avec une solution d'acide chlorhydrique décinormale (HCl 0,1 N).

Le degré de substitution (noté $DS_c$) déterminé par cette méthode donne le pourcentage total du nombre de fonctions alcool de la cellulose qui sont estérifiées dans la composition, c'est-à-dire que $DS_c$ = 100 % lorsque les trois fonctions alcool du motif de la cellulose sont estérifiées, et $DS_c$ = 30 % lorsque 0,9 fonction alcool est estérifiée.

Le $DS_c$ ainsi déterminé donne donc directement le pourcentage de fonctions alcool de la cellulose qui sont transformées en groupes formiate.

3. Mesures effectuées sur les fibres régénérées

3.1. Propriétés mécaniques des fibres

Par "fibres", on entend ici soit des fibres multifilamentaires, constituées de manière connue de plusieurs filaments élémentaires de faible diamètre (faible titre), soit des fibres monofilamentaires, encore appelées "monofilaments", constituées d'un seul filament de diamètre important (titre élevé). Les fibres monofilamentaires de l'invention ont notamment un diamètre supérieur à 40 µm et un titre supérieur à 2,0 tex.

Par "conditionnement", on entend le stockage des fibres, avant mesure de leurs propriétés, selon la norme européenne DIN EN 20139 de septembre 1992 (utilisation d'une atmosphère standard: température de 20°C ; hygrométrie de 65 %).

Le titre des fibres est déterminé selon la norme d'Allemagne DIN 53830 de juin 1965, les fibres étant conditionnées au préalable. La mesure est opérée sur au moins trois échantillons, chacun correspondant à une longueur de 50 m, par pesée de cette longueur de fibre. Le titre est donné en tex (poids en gramme de 1000 mètres de fibre).

Les propriétés mécaniques des fibres (ténacité, module initial et allongement à la rupture) sont mesurées à l'aide d'une machine de traction ZWICK GmbH & Go (Allemagne) de type 1435 ou de type 1445 (machines correspondant aux normes d'Allemagne DIN 51220, 51221, et 51223), et, sauf indication différente, selon le mode opératoire décrit dans la norme d'Allemagne DIN 53834. Les fibres subissent une traction sur une longueur initiale de 400 mm. S'il s'agit de fibres multifilamentaires, ces dernières reçoivent pour la mesure une faible torsion de protection préalable (torsion avec un angle d'hélice de 6° environ). Tous les résultats donnés sont une moyenne de 10 mesures.

La ténacité (T) et le module initial (Mi) sont indiqués on cN par tex (centinewton par tex). L'allongement à la rupture (Ar) est indiqué on pourcentage. Le module initial (Mi) est défini comme la pente de la partie linéaire de la courbe force-allongement, qui intervient juste après la prétension standard de 0,5 cN/tex. T, Mi et Ar sont mesurés sur des fibres conditionnées.

3.2 Caractéristiques chimiques des fibres

La détermination du degré de substitution des fibres régénérées (noté $DS_f$) est effectuée de la façon suivante :

Environ 400 mg de fibre sont coupés en morceaux de 2-3 cm et on les introduit dans un erlenmeyer. On ajoute 50 ml d'eau et 1 ml de soude normale (NaOH 1N). La matière est mélangée à température ambiante, pendant 15 minutes. La soude en excès est titrée avec une solution d'acide chlorhydrique décinormale (HCl 0,1 N). La valeur de $DS_f$, calculée comme au paragraphe 1.2 pour le degré de substitution du formiate de départ (DS), donne le pourcentage de fonctions alcool de la cellulose qui restent transformées on groupes formiate après régénération.

3.3 Morphologie des fibres

La morphologie des filaments élémentaires des fibres étudiées peut être examinée au microscope optique de polarisation, ces filaments étant disposés entre polariseur et analyseur linéaires croisés, l'axe de ces filaments étant parallèle aux surfaces planes du polariseur et de l'analyseur. On peut également examiner les filaments au microscope électronique.

On observe tout d'abord ces filaments à l'état initial, c'est-à-dire intacts, puis on poursuit l'observation tout on leur faisant subir, par étapes successives, une abrasion progressive. Cette action abrasive est réalisée simplement, par exemple on frottant, on râpant plus ou moins la surface des filaments, ceci à l'aide d'un objet non coupant de taille adaptée, comme par exemple une gomme, un élément de pince ou de spatule.

Une telle analyse de la morphologie des filaments, pris individuellement, renseigne sur leur cohésion latérale, c'est-à-dire sur leur cohésion dans une direction transversale (normale à l'axe du filament).

Les fibres sont ici étudiées telles qu'elles, à l'état sec. Elles ne contiennent qu'une faible proportion d'eau, qui constitue leur humidité résiduelle naturelle.

3.4 Test de Fibrillation à l'eau

L'étude de l'aptitude à la fibrillation des fibres, ou en d'autres termes de leur résistance à la fibrillation, peut être conduite à l'aide d'un test, dit "test de fibrillation à l'eau", réalisé sur des filaments élémentaires de ces fibres, gonflés dans l'eau.

De manière connue, on entend par fibrillation des fibres cellulosiques une décohésion partielle, locale, superficielle, des filaments considérés. Cette décohésion, essentiellement longitudinale (c'est-à-dire selon l'axe du filament) fait suite à une sollicitation mécanique de frottement et d'abrasion de la surface, et elle est notablement renforcée lorsque cette sollicitation mécanique vient se conjuguer, comme dans le présent test, à une action supplémentaire de gonflement dans l'eau.

Cette fibrillation se traduit par l'apparition, à la surface des filaments, d'un nombre plus ou moins important de fibrilles ayant la forme, l'apparence de cheveux très fins, ou de rubans, de pelures très minces. Ces fibrilles, microfibres ou pelures très minces, ont une épaisseur (par exemple un diamètre) notablement inférieure à celle des filaments sur lesquels elles se forment, en général d'un facteur 10 ou 20 au moins, par exemple inférieure au micromètre ou au dixième de micromètre, et ont une longueur limitée, par exemple de quelques dizaines à quelques centaines de micromètres. On sait que la fibrillation des fibres cellulosiques peut varier dans une très large mesure, selon leur nature, leur mode de réalisation. Le test de fibrillation à l'eau peut notamment servir à établir un classement entre ces fibres.

Ce test de fibrillation, typiquement utilisé pour des fibres cellulosiques textiles, est décrit dans la référence suivante: I. Marini et al, Chemiefasern/Textilindustrie, 43./95. Jahrgang, November 1993, pp. 879-883.

Huit filaments élémentaires sont coupés à une longueur de 200 mm, puis introduits avec 4 ml d'eau distillée dans un flacon de contenance 25 ml, à température ambiante. Le flacon est ensuite agité pendant 24 heures à l'aide d'un agitateur type Salvis à 200 tours par minute. Les filaments sont ensuite séchés à température ambiante et observés au microscope électronique à balayage, sous un grossissement de 200 à 2000 selon le diamètre des filaments (par exemple 200 pour des monofilaments dont le diamètre est supérieur à 40 μm). L'état de surface des filaments ainsi traités est comparé à celui des filaments avant le test de fibrillation.

Comme indiqué dans le document de I. Marini ci-dessus, un classement peut être établi entre différentes fibres, selon une appréciation visuelle globale des filaments testés, grâce à une échelle de fibrillation consistant en des notes (ou degrés) de fibrillation variant de 0 à 6.

**II - Réalisation des fibres**

Dans tous les exemples qui suivent, les compositions conformes à l'invention sont mises en oeuvre par filage, c'est-à-dire par extrusion à travers une filière, pour donner des articles en cellulose régénérée qui sont soit des fibres multifilamentaires, soit des fibres monofilamentaires.

1. Réalisation du formiate de cellulose

Le formiate de cellulose est préparé par exemple conformément à la demande WO-A 85/05115 précitée à partir de cellulose, d'acide formique et d'acide orthophosphorique cristallin à 99 %.

On utilise à titre d'exemple le mode opératoire suivant : on introduit dans un malaxeur à double enveloppe, comportant des bras en Z, de la poudre de cellulose (dont l'humidité est en équilibre avec l'humidité ambiante de l'air). On ajoute ensuite un mélange d'acide orthophosphorique cristallin à 99 % et d'acide formique. Les trois composants se trouvent par exemple dans les proportions suivantes : cellulose 16 % ; acide orthophosphorique 51 % ; acide formique 33 % (% en poids).

Le tout est mélangé pendant une période d'environ 2 à 4 heures, la température du mélange étant maintenue entre 10 et 20°C. Dans ces conditions le degré de polymérisation subit une diminution de 20 à 30 %. La variation de la proportion relative d'acide formique permet de faire varier le degré de substitution (DS). Dans ces conditions, le DS obtenu est compris entre 40 % et 50 %.

La solution de formiate de cellulose ainsi obtenue est extrudée hors du mélangeur comportant des bras en Z par une vis d'extrusion sous forme de joncs liquides d'environ 0,5 mm de diamètre que l'on plonge dans l'eau froide (par exemple 10°C). On obtient ainsi, par coagulation et lavage neutre, des joncs de formiate de cellulose que l'on sèche avec de l'air chaud. Il va de soi que cette méthode n'est citée qu'à titre d'exemple, c'est ainsi que, selon les conditions d'extrusion, on peut obtenir des joncs beaucoup plus fins, voire des fibres grossières, sous forme de bourre de formiate de cellulose. La réalisation de films minces, par exemple en extrudant la solution sur les cylindres d'une calandre est également possible.

2. Réalisation des compositions de filage

Les compositions de formiate de cellulose conformes à l'invention sont obtenues en dissolvant ces joncs de formiate de cellulose sec dans les systèmes solvants étudiés.

On utilise à titre d'exemple le mode opératoire suivant:

Les joncs sont coupés en segments longs d'environ 10 mm. Le mélange des constituants formant le système solvant est réalisé préalablement à température ambiante. Les joncs coupés et le système solvant sont introduits dans un réacteur à température ambiante. Ce réacteur comporte un récipient à double enveloppe, un agitateur, des prises de vidè, et des arrivées d'azote.

Ce mélange est ensuite progressivement amené, en un temps d'environ une heure, à la température de 110°C, sous faible agitation. Au cours de cette première étape peut être inclus un palier de dégazage, sous vide partiel. Dans un deuxième temps, la mise en solution est poursuivie en isotherme à 120°C, sous agitation, pendant environ de 2 à 3 heures, jusqu'à l'obtention d'une solution limpide, homogène, exempte de bulle. Cette deuxième phase peut être réalisée sous atmosphère inerte. Il va de soi que cette méthode n'est citée qu'à titre d'exemple. Les températures et les durées indiquées peuvent varier sensiblement selon le mélange étudié et la composition souhaitée.

3. Filage de la composition

La composition qui, dans le réacteur précédemment décrit, est à une temperature supérieure à $T_f$ (par exemple 120°C), est sous forme d'une solution, c'est-à-dire sous une forme liquide, fluide, homogène. Cette solution est transférée par l'application d'une pression d'azote vers le bloc de filage et elle alimente une pompe de filature. A partir de cette pompe de filature, on extrude la solution à travers une filière (précédée d'un filtre) comportant n orifices ou capillaires d'extrusion (n étant égal à 1, 26 ou 100 dans les exemples), de diamètre D (50, 100, 300 ou 800 micromètres dans les exemples). La veine liquide qui sort de chaque orifice acquiert une vitesse de sortie notée $V_e$ dans le tableau 2. Au cours du cheminement depuis le réacteur vers la filière, la solution est progressivement amenée à la température de filage voulue qui est proche de la température de la filière notée $T_e$ dans le tableau 2.

On transforme ainsi la composition en un extrudat liquide ayant la forme d'une fibre constituée de n veines liquides.

L'étape suivante consiste à tremper thermiquement, par refroidissement rapide, l'extrudat liquide ainsi obtenu jusqu'à obtenir un gel. Cette opération dite "étape de gélification" est réalisée par passage de lextrudat liquide dans une zone dite "zone de gélification" contenant un milieu refroidissant, dit "milieu de gélification" ou "milieu gélifiant", maintenu à une température notablement inférieure à $T_f$ (par exemple d'au moins 50°C).

La filière est située à une distance allant de quelques mm à quelques cm (préférentiellement environ 10 mm), au dessus de la zone de gélification. Le filage est ainsi réalisé selon la technique dite "avec couche de fluide non coagulante" (dry jet wet), l'extrudat liquide qui sort de la filière traversant une couche de fluide non coagulante, par exemple une couche d'air, avant de pénétrer dans la zone de gélification.

La zone de gélification comporte un milieu de gélification dont la température, notée $T_b$, varie selon le type de fibre recherchée, tout en étant notablement inférieure à $T_f$. La température $T_b$ est préférentiellement inférieure à la température ambiante, et plus préférentiellement inférieure à -10°C. La zone de gélification peut être constituée, par exemple, d'un bain liquide, ce liquide pouvant être miscible ou non miscible avec le système solvant. Ce bain liquide peut être par exemple un bain d'eau, ou à base d'eau, un bain de solvant organique, ou à base de solvant organique. De tels solvants sont par exemple les alcools, par exemple le méthanol, l'éthanol, les alcanes, par exemple l'heptane, l'octane, le nonane, les cétones, par exemple l'acétone, la méthyléthylcétone, seuls ou en mélange.

De manière préférentielle, le milieu gélifiant est un liquide non miscible ou quasiment pas miscible avec le système solvant, ce milieu étant par exemple un alcane.

Un milieu gazeux refroidi, quoique moins pratique à utiliser lorsque le procédé de l'invention est mis en oeuvre, comme décrit ici, pour l'obtention de fibres ou de films, pourrait également constituer le milieu de gélification.

Dans cette zone de gélification, une fibre en dérivé cellulosique est donc obtenue par une trempe thermique de la composition de filage, sous forme d'un gel élastique et thermoréversible, généralement transparent.

Cette phase gel de la composition est caractérisée par l'apparition d'une force de rappel élastique lorsque le gel est soumis à un étirage de faible amplitude. Cette phase gel consiste en un réseau polymérique tridimensionnel gonflé dans son système solvant, à l'instar d'autres phases gel élastiques et thermoréversibles de polymères connues, telles que les gels d'alcool de polyvinyle, ou de polyéthylène.

La formation de la fibre sous forme de gel, dans la zone de gélification, étant le simple résultat d'une trempe thermique, elle peut s'effectuer sans échange de matière entre l'extrudat liquide et le milieu gélifiant, notamment sans départ, ou sans départ notable, de système solvant de la composition. Il suffit pour cela de choisir un milieu gélifiant qui soit non miscible ou quasiment pas miscible avec le système solvant de la composition.

En généralisant, le procédé de l'invention est de préférence mis en oeuvre avec des conditions de gélification qui empêchent ou minimisent les échanges de matière entre l'extrudat liquide et le milieu gélifiant.

Cette étape de formation de la fibre par gélification est par conséquent très différente de toutes les étapes connues de formation, par filage, de fibres cellulosiques, comme décrit par exemple dans les demandes WO-A-85/05115 et WO-A-94/17136 précitées. Ces étapes connues consistent en effet, de manière classique, en une coagulation dont le principe est au contraire de provoquer une extraction importante de solvant hors de la fibre, lors de la formation de cette dernière.

En sortie de la zone de gélification, la fibre sous forme de gel ainsi formée est reprise sur un premier dispositif d'entraînement, constitué par exemple de rouleaux, dont la vitesse d'appel (vitesse d'entraînement linéaire de la fibre), notée $V_{a1}$, est choisie de préférence proche de $V_e$, mais sans que cela soit nécessaire. La fibre passe ensuite dans une succession de dispositifs de lavage à base de solvant organique, par exemple un alcool comme le méthanol, ou à base d'eau, afin d'extraire et d'éliminer de la fibre les solvants de la composition initiale.

A la sortie du lavage, la fibre est reprise sur un deuxième dispositif d'entraînement, par exemple des rouleaux, avec une vitesse d'appel $V_{a2}$, qui peut être, ou non, égale à $V_{a1}$. Lorsque $V_{a2}$ et Val ont des valeurs différentes, on peut avoir entre les deux dispositifs d'entraînement soit un étirage de la fibre (si $V_{a2} > V_{a1}$) soit une relaxation de la fibre (si $V_{a2} < V_{a1}$).

L'utilisation de deux dispositifs d'entraînement n'est pas limitative, le procédé conforme à l'invention pouvant utiliser un seul dispositif d'entraînement, ou plus de deux dispositifs d'entraînement. C'est ainsi que la fibre sous forme de gel pourrait subir une étape de relaxation, ou d'étirage, entre la zone de gélification et la zone de lavage, en employant notamment des dispositifs d'entraînement supplémentaires.

La température des bains de lavage est en général supérieure à celle du milieu de gélification, mais sans que cela soit nécessaire. La fibre peut être séchée ou non avant de subir l'opération de régénération.

4. Régénération de la cellulose

Lors de cette étape de régénération, la fibre de formiate de cellulose est plongée pendant quelques secondes dans un bain de régénération, qui est par exemple à la température ambiante, ce bain étant constitué d'une solution alcaline, par exemple une solution de soude contenant de 1 à 5 % en poids de soude. La fibre ainsi régénérée est lavée, puis séchée.

Pendant ces différentes étapes d'élaboration (en particulier filage et régénération), la fibre peut être soumise à des étirages, imposés et subis, qui se traduisent par la valeur du rapport d'étirage total, noté FEF dans le tableau 2.

Le rapport d'étirage total est déterminé par le calcul, en partant de façon connue du titre de la fibre et de son degré de substitution mesurés après régénération, ainsi que des paramètres de mise en oeuvre du procédé et des caractéristiques de la composition. La valeur de FEF ainsi déterminée est par exemple très proche du rapport $V_{a2}/V_e$, en l'absence d'étirage ou de relaxation notables après le deuxième dispositif d'entraînement, notamment pendant la régénération.

5. Exemples

Le tableau 1 regroupe des exemples de compositions conformes à l'invention.

On réalise des essais de préparation de fibres en cellulose régénérée à partir des compositions du tableau 1, en suivant le procédé décrit dans les paragraphes 3 et 4 précédents. Les paramètres caractéristiques d'élaboration des fibres sont donnés dans le tableau 2. Les propriétés des fibres obtenues sont données dans le tableau 3.

Tous ces essais sont conformes à l'invention.

Les abréviations, symboles et unités utilisés dans ces tableaux 1 à 3 sont les suivants :

Pour le tableau 1 :

DMSO : diméthylsulfoxyde;
NMP : N-méthylpyrrolidone;
EG : éthylèneglycol;
DP : degré de polymérisation de la cellulose dans le formiate de départ;
DS : degré de substitution du formiate de cellulose de départ (en %);
C : concentration en formiate de cellulose dans la composition (en % en poids);
$DS_c$ : degré de substitution du formiate de cellulose dans la composition (en %);
$T_f$ : température de fusion de la composition sous forme de gel (en °C);
$Ar_g$ : allongement à la rupture de la composition sous forme de gel (en %);
$\sigma_g$ : contrainte à la rupture de la composition sous forme de gel (en MPa).

Pour le tableau 2

n : nombre de trous de la filière;
D : diamètre de chaque trou de filière (en µm);
$T_e$ : température de la filière (en °C);
$V_e$ : vitesse de sortie de la filière (en mètre par minute);
$T_b$ : température de la zone de gélification (en °C);
$V_{a1}$ : première vitesse d'appel (en mètre par minute);
$V_{a2}$ : deuxième vitesse d'appel (en mètre par minute);
$C_{NaOH}$ : concentration en NaOH dans le bain de régénération (en % en poids);
$t_{rég}$ : temps de séjour dans le bain de régénération (en seconde)
FEF : facteur d'étirage total

Pour le tableau 3

Ti : titre (en tex) ;
T : ténacité (en cN/tex);
Ar : allongement à la rupture (en %);
Mi : module initial (en cN/tex);
$DS_f$ : degré de substitution de la cellulose en groupe formiate (en %).

Remarques sur ces exemples:

Dans les conditions de réalisation des compositions le degré de polymérisation du formiate de cellulose dans la composition est inférieur au degré de polymérisation du formiate de cellulose de départ, l'écart étant au maximum de 10 %, ce qui est très faible.

Les proportions du système solvant donnent la teneur relative des constituants I et II en poids.

Les exemples de compositions conformes à l'invention, ainsi que les caractéristiques de ces compositions, sont donnés dans le tableau 1, sous la forme de 10 essais différents référencés de "A" à "J".

Les fibres conformes à l'invention (14 exemples au total) et leurs paramètres d'élaboration apparaissent dans le tableau 2, les propriétés de ces fibres étant résumées dans le tableau 3. Toute lettre utilisée pour désigner une composition de filage donnée du tableau 1 sert également à désigner les fibres filées à partir de cette composition donnée, cette lettre étant, pour les tableaux 2 et 3, accompagnée d'un indice, l'indice "1" ou l'indice "2" selon que 1 fibre (1 essai de filage) ou 2 fibres (2 essais de filage) ont été réalisées à partir de la même composition. Par exemple, une seule fibre référencée "A1" dans les tableaux 2 et 3 a été filée à partir de la composition référencée "A" dans le tableau 1. Deux fibres, référencées "C1" et "C2" dans les tableaux 2 et 3, ont été filées à partir de la même composition référencée "C" dans le tableau 1.

Les propriétés des fibres données dans le tableau 3 sont celles des fibres régénérées finales. Ces caractéristiques concernent soit des fibres multifilamentaires, soit des monofilaments dans le cas des exemples $C_1$ et $C_2$ d'une

part, $J_1$ et $J_2$ d'autre part.

Le diamètre des monofilaments conformes à l'invention est déterminé soit par le calcul, de manière connue à partir du titre et de la masse volumique (valeur moyenne: 1,50), soit par mesure sous microscope optique ou électronique (grossissement 200).

TABLEAU 1

| Ex | Formiate de cellulose de départ | | Composition | | | | | | Propriétés mécaniques de la composition dans sa phase de gel | |
|---|---|---|---|---|---|---|---|---|---|---|
| | | | Système | solvant | Formiate | | | | | |
| | DP | DS (%) | Nature (I/II) | Proportions (I/II) | C (%) | $DS_c$ (%) | $T_f$ (°C) | $Ar_g$ (%) | σg (MPa) |
| A | 530 | 44 | DMSO/ EAU | 80 / 20 | 17 | 40,6 | 81 | 70 ± 20 | 2,9 ± 1,0 |
| B | 1040 | 43 | DMSO/ EAU | 80 / 20 | 12 | 35,2 | 91 | ......non déterminé...... | |
| C | 950 | 44 | DMSO/ EAU | 80 / 20 | 10 | 30,7 | 77 | ......non déterminé...... | |
| D | 830 | 47 | DMSO/ EAU | 80 / 20 | 14 | 40,0 | 84 | ......non déterminé...... | |
| E | 530 | 44 | DMSO/ EG | 80 / 20 | 14 | 32,0 | 73 | 71 ± 9 | 3,3 ± 0,4 |
| F | 560 | 45 | NMP / EAU | 80 / 20 | 14 | 43,0 | 68 | 90 ± 6 | 1,3 ± 0,3 |
| G | 560 | 45 | NMP / EAU | 70 / 30 | 14 | 36,0 | 80 | 69 ± 10 | 1,6 ± 0,5 |
| H[a | 530 | 38 | DMSO/ EG;EAU | 80 / 10;10 | 14 | 36,0 | 88 | 61 ± 5 | 2,2 ± 0,3 |
| I | 530 | 43 | DMSO/ EAU | 80 / 20 | 17 | 36,0 | 81 | 62 ± 5 | 2,0 ± 0.4 |
| J | 830 | 41 | DMSO/ EAU | 80 / 20 | 12 | 35,0 | 70 | 77 ± 5 | 1,3 ± 0,3 |

**Exemples de compositions conformes à l'invention**

DMSO : Diméthylsulfoxyde ; EG : Ethylèneglycol ; NMP : N-méthylpyrrolidone

[a : le constituant 11 est formé d'un mélange en proportions relatives identiques d'eau et d'éthylèneglycol

TABLEAU 2

| Ex | Filage | | | | | | | | Régénératiom | | |
| --- | --- | --- | --- | --- | --- | --- | --- | --- | --- | --- | --- |
| | n | D (µm) | $T_e$ (°C) | $V_e$ (m/min) | Zone de gélification | $T_b$ (°C) | $V_{a1}$ (m/min) | $V_{a2}$ (m/min) | $C_{NaOH}$ (%) | $t_{rég}$ (s) | FEF |
| A1 | 26 | 50 | 110 | 44,0 | Méthanol | -15 | 60,0 | 63,0 | 1 | 180 | 1,4 |
| B1 | 100 | 100 | 100 | 19,5 | Méthanol | -16 | 23,2 | 25,0 | 3 | 45 | 1,4 |
| C1 | 1 | 800 | 120 | 11,6 | Méthanol | -18 | 11,6 | 12,0 | 5 | 60 | 1,3 |
| C2 | 1 | 800 | 120 | 11,6 | Méthanol | -18 | 6,0 | 8,0 | 5 | 60 | 0,7 |
| D1 | 100 | 100 | 110 | 33,2 | Eau | + 4 | 18,0 | 18,0 | 3 | 120 | 0,8 |
| E1 | 100 | 50 | 100 | 46,0 | Méthanol | -15 | 60,0 | 63,0 | 1 | 300 | 1,4 |
| F1 | 26 | 50 | 110 | 44,0 | Méthanol | -15 | 60,0 | 63,0 | 1 | 120 | 1,5 |
| F2 | 26 | 50 | 110 | 88,0 | Méthanol | -15 | 100,0 | 100,0 | 1 | 120 | 1,1 |
| G1 | 26 | 50 | 100 | 176,0 | Méthanol | -15 | 100,0 | 100,0 | 1 | 120 | 0,6 |
| G2 | 26 | 50 | 100 | 88,0 | Méthanol | -15 | 100,0 | 100,0 | 1 | 120 | 1,2 |
| H1 | 26 | 50 | 110 | 88,0 | Méthanol | -15 | 100,0 | 100,0 | 5 | 6 | 1,1 |
| I1 | 26 | 50 | 100 | 65,0 | Eau | +16 | 60,0 | 60,0 | 3 | 40 | 0,9 |
| J1 | 1 | 300 | 110 | 120,0 | Heptane | -20 | 40,0 | 47,0 | 5 | 300 | 0,4 |
| J2 | 1 | 300 | 110 | 27,0 | Eau | +16 | 60,0 | 60,0 | 5 | 300 | 2,2 |

Paramètres caractéristiques d'élaboration de fibres conformes à l'invention

TABLEAU 3

| Propriétés des fibres conformes à l'invention | | | | | |
|---|---|---|---|---|---|
| Ex | Ti (tex) | T (cN/tex) | Ar (%) | Mi (cN/tex) | $DS_f$ (%) |
| A1 | 5,9 | 21,6 | 13,8 | 875 | 0,1 |
| B1 | 61,1 | 28,0 | 10,3 | 1080 | 3,4 |
| C1[a] | 35,2 | 21,2 | 19,0 | 960 | 2,8 |
| C2[b] | 71,6 | 20,9 | 16,2 | 950 | 3,1 |
| D1 | 127,0 | 29,4 | 6,4 | 1210 | 0,4 |
| E1 | 18,5 | 20,6 | 7,1 | 1130 | 0,3 |
| F1 | 4,7 | 22,6 | 11,1 | 980 | 2,6 |
| F2 | 5,5 | 22,3 | 9,7 | 910 | 1,4 |
| G1 | 10,9 | 23,5 | 10,3 | 870 | 3,3 |
| G2 | 5,5 | 25,6 | 5,9 | 1165 | 1,6 |
| H1 | 5,9 | 23,1 | 12,5 | 1220 | 1,2 |
| I1 | 8,3 | 19,8 | 13,2 | 930 | 0,1 |
| J1[c] | 21,0 | 18,2 | 19,6 | 920 | 0,2 |
| J2[d] | 3,5 | 16,3 | 12,5 | 900 | 3,0 |

[a] : monofilament de diamètre 170 μ
[b] : monofilament de diamètre 370 μ
[c] : monofilament de diamètre 130 μ
[d] : monofilament de diamètre 55 μ

Comme le montent les exemples précédents, l'utilisation de l'acide formique et de l'acide phosphorique, lors de la réalisation du formiate de cellulose, permet d'obtenir un degré de substitution élevé en formiate de cellulose, supérieur à 30 %, sans diminution excessive du degré de polymérisation initial de la cellulose.

En outre, la possibilité de dérivation en solution, c'est-à-dire in situ (formylation et dissolution de la cellulose dans le même mélange solvant) permet d'obtenir une répartition homogène de ces poupes formiate, à la fois dans les zones amorphes et dans les zones cristallines du formiate de cellulose.

D'autres procédés d'obtention du formiate de cellulose sont possibles, ces procédés étant réalisés de préférence en solution pour obtenir cette répartition homogène des poupes formiate.

Comme le monte le tableau 1, le degré de substitution du formiate de cellulose peut être inférieur dans la composition à la valeur qu'il avait dans le formiate de départ, c'est-à-dire dans le formiate avant réalisation de la composition. Pour cette raison, on préfère les conditions de réalisation des compositions conformes à l'invention qui permettent d'avoir dans ces compositions une valeur de $DS_c$ au moins égale à 25 %.

Le gel thermoréversible obtenu par une tempe thermique des compositions conformes à l'invention est élastique comme le montent en détail les exemples A, E, F, G, H, I, J et des courbes force-allongement typiques de traction de gel de la figure qui correspondent aux exemples A (courbe C1), E (courbe C2) et G (courbe C3), l'axe des abscisses correspondant à l'allongement ($\varepsilon$) en % et l'axe des ordonnées correspondant à la force (F) en newtons.

Les filaments des fibres obtenues conformément à l'invention, lorsqu'ils sont examinés comme indiqué au paragraphe 3.3 du chapitre I précédent, montrent en section transversale (selon une direction normale à l'axe du filament) une morphologie qui est pratiquement continue de la périphérie jusqu'au coeur du filament, analogue à celle observée pour des fibres décrites dans la demande WO-A-94/17136 précitée. Par morphologie pratiquement continue de la périphérie jusqu'au coeur, on entend le fait que ces filaments présentent une bonne cohésion latérale, et ne comportent pas notamment une morphologie en couches telle que décrite par exemple dans la demande WO-A-85/05115, pour des compositions anisotropes de filage, une telle morphologie en couches se caractérisant par une succession de nombreuses couches concentriques entourant l'axe de ces filaments, emboîtées les unes dans les autres, et liées entre elles par des forces cohésives relativement faibles.

Les fibres conformes à l'invention ont été soumises au test de fibrillation à l'eau tel que décrit au paragraphe 3.4 du chapitre I. Pour comparaison, ont été testées des fibres conformes aux demandes WO-A-85/05115 et WO-A-94/17136 précitées. Les fibres correspondant à la première demande WO-A-85/05115 répondent au test par une fibrillation forte, nettement marquée. Comparées à ces dernières, les fibres conformes à la seconde demande WO-A-94/17136, montrent une résistance à la fibrillation nettement améliorée ; mais la présence d'un certain nombre de fibrilles, à la surface des filaments testés, révèle une fibrillation non négligeable.

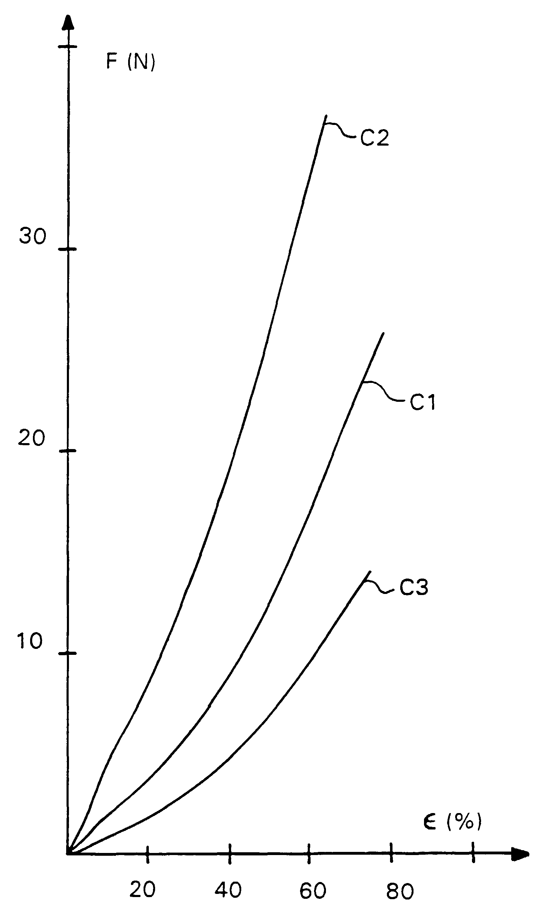

Seules les fibres de l'invention révèlent, à la sortie du test, un état de surface des filaments qui n'est quasiment pas modifié. En particulier, aucune présence de fibrilles n'est détectée à la surface des filaments. C'est ainsi que dans l'échelle de fibrillation (notes de fibrillation variant de 0 à 6) décrite dans le document précité de Marini et al (cf paragraphe 3.4, chap. I), la note de fibrillation serait égale à zéro (pas de fibrillation), ou dans tous les cas inférieure à 1, une note égale à 1 représentant déjà une très faible fibrillation comme illustré par exemple à la figure 5a du document de Marini ci-dessus.

En ce sens, on peut donc conclure que les filaments des fibres de l'invention ne fibrillent pas.

En conséquence, les fibres conformes à l'invention révèlent une bien meilleure résistance à la fibrillation que les fibres cellulosiques décrites dans les demandes WO-A-85/05115 et WO-A-94/17136 précitées, elles-mêmes issues du formiate de cellulose.

Il est connu que la résistance à la fibrillation est une propriété particulièrement recherchée dans le domaine des fibres textiles cellulosiques, notamment lors des différentes étapes d'ennoblissement des fibres ou des tissus élaborés à partir de ces fibres (voir par exemple: Melliand Textilberichte, 10/93, pp. 945-956).

Pour résumer, grâce à la caractéristique nouvelle et tout à fait inattendue de la composition de l'invention qu'est son caractère de gel élastique et thermoréversible, une étape de coagulation n'est plus nécessaire pour l'obtention par filage de fibres cellulosiques. Cette étape de coagulation est ici remplacée par une étape de gélification qui peut être conduite sans départ, ou sans départ notable, du système solvant. Ainsi, peut être obtenue, par filage de gel, une fibre cellulosique constituée de filaments présentant une morphologie pratiquement continue dans une direction transversale, une très bonne cohésion latérale, ces filaments, en outre, ne fibrillant pas lorsqu'ils sont soumis au test de fibrillation à l'eau tel que décrit précédemment.

Un autre avantage de l'invention est que cette étape de gélification permet, en fonction des conditions expérimentales choisies pour le filage (en jouant notamment sur la température de gélification, la nature du milieu gélifiant, la forme des capillaires d'extrusion de la filière), de moduler très largement la forme de la section droite des filaments des fibres de l'invention. Il est ainsi possible d'obtenir, soit des filaments ayant une section droite très régulière, présentant des contours linéaires nets et précis (par exemple une excellente circularité), soit au contraire des filaments dont la section droite possède des contours fortement accidentés, par exemple crénelés. Une telle modulation permet notamment de modifier l'aspect optique des fibres ou des tissus textiles préparées à partir de ces fibres.

Les filaments, notamment les monofilaments, conformes à l'invention peuvent avoir une section transversale quelconque, par exemple de forme circulaire ou ovale. Dans le cas où la section transversale n'est pas circulaire, le terme "diamètre" signifie alors la plus petite dimension de cette section.

De préférence, la composition conforme à l'invention a au moins une des caractéristiques suivantes :

- la concentration en formiate de cellulose est au moins égale à 4 % en poids;
- le degré de substitution de la cellulose en groupes formiate est au moins égal à 25%;
- le degré de polymérisation de la cellulose dans le formiate est au moins égal à 200.

Avantageusement, la composition conforme à l'invention a au moins une des caractéristiques suivantes :

- la concentration en formiate de cellulose est au moins égale à 8 % en poids;
- le degré de substitution de la cellulose en groupes formiate est au moins égal à 30%;
- le degré de polymérisation de la cellulose dans le formiate est au moins égal à 500;
- la teneur relative en constituant(s) (II) dans le système solvant est au moins égale à 15 % en poids et plus avantageusement au moins égale à 20 %,

De préférence, la température de fusion du gel, $T_f$, est supérieure à 50°C.

Le procédé conforme à l'invention présente notamment les avantages suivants:

- Il n'est pas polluant dans les conditions d'utilisation si on le compare aux procédés de la viscose ou de la rayonne;
- Le procédé peut être utilisé pour produire des fibres dont le titre et les propriétés mécaniques (ténacité, module initial, allongement à la rupture) varient dans une large mesure, en jouant notamment sur le degré de polymérisation de la cellulose, sur la concentration en formiate de cellulose dans la composition de filage et sur le facteur d'étirage lors des différentes étapes d'élaboration de la fibre. C'est ainsi par exemple qu'il permet d'obtenir des monofilaments de titre élevé ayant des propriétés mécaniques comparables à celles de multifilaments cellulosiques connus;

- Il est économique car il permet la mise en oeuvre de solutions de filage plus concentrées que celles qui sont utilisées dans les procédés connus de production de fibres de viscose ou de fibres de rayonne.

De préférence, la fibre conforme à l'invention a au moins une des caractéristiques suivantes :

- sa ténacité est au moins égale à 20 cN/tex;
- son allongement à la rupture est au moins égal à 10 % et avantageusement au moins égal à 15 %.

De préférence, la fibre monofilamentaire conforme à l'invention a un diamètre au moins égal à 100 micromètres et un titre au moins égal à 11,5 tex.

Bien entendu, l'invention n'est pas limitée aux exemples de réalisation précédemment décrits.

C'est ainsi que la composition conforme à l'invention peut être utilisée pour réaliser des films, par exemple en utilisant une technique de coulée sur tambour refroidi ou en utilisant une technique d'extrusion avec passage, en sortie de filière, dans un espace de fluide non coagulant.

Grâce a ses propriétés nouvelles et inattendues, la composition conforme à l'invention peut, en définitive, prendre un grand nombre de formes possibles à l'état liquide, puis, à la suite d'une trempe thermique, être transformée en un article intermédiaire, de forme déterminée, en gel de formiate de cellulose, l'invention concernant également un tel article. Cet article intermédiaire sera ensuite régénéré pour fournir un article fini en cellulose régénérée.

La première étape de transformation de la composition, selon le procédé conforme à l'invention, pourra être, outre une opération d'extrusion, une opération de moulage, de coulée, de pressage, de pulvérisation, ou ,plus généralement, toute mise en forme précise et déterminée, à l'état liquide, de la composition, avant mise en oeuvre de l'étape suivante de gélification par trempe thermique.

Les compositions conformes à l'invention peuvent ainsi être utilisées pour réaliser, à l'aide du procédé de l'invention, tout type d'articles en cellulose régénérée autres que des fibres ou des films, par exemple des particules ou des microparticules de forme sphérique ou quasi-sphérique.

D'autre part, différents constituants peuvent être éventuellement ajoutés au formiate de cellulose, ou au système solvant, avant, pendant ou après la dissolution du formiate, sans que l'esprit de l'invention soit modifié. De tels constituants, s'ils sont présents, le sont en proportion mineure, le total de leurs parties en poids dans la composition étant de préférence inférieur à 10 %, de manière encore plus préférentielle inférieur à 5 %.

A titre d'exemple, ces constituants supplémentaires pouffaient être des sels, par exemple des halogénures de métaux alcalins ou alcalino-terreux, des plastifiants, des polymères susceptibles de se dissoudre avec la cellulose, des surfactants, divers additifs ou charges permettant par exemple d'améliorer la transformation et la mise en oeuvre des compositions de l'invention, par exemple leur filabilité, leur étirabilité, ou encore d'améliorer les propriétés des articles obtenus, par exemple des fibres ou films, comme les propriétés mécaniques, les propriétés d'endurance, l'adhésivité à une matrice de gomme.

En outre, le terme "formiate de cellulose" couvre les cas où les groupes alcool de la cellulose sont substitués par d'autres groupes que les poupes formiate, en plus de ceux-ci, par exemple des groupes esters, notamment des groupes acétate, le degré de substitution de la cellulose en ces autres groupes étant de préférence inférieur à 10%.

## Revendications

1. Composition à base de formiate de cellulose et d'un système solvant de ce formiate, caractérisée par les points suivants :

   - a) le système solvant est formé d'au moins un constituant (I) solvant aprotique du formiate de cellulose et d'au moins un constituant (II) non solvant du formiate de cellulose, la quantité de ce non solvant, ou de l'ensemble de ces non solvants, étant au moins égale à 10 % en poids et au plus égale à 40 % en poids du poids total du système solvant;
   - b) à la température ambiante, la composition est un gel élastique et thermoréversible;
   - c) à une température au moins égale à la température de fùsion du gel, notée $T_f$, la composition est une solution filable.

2. Composition selon la revendication 1, caractérisée en ce que :

   - le constituant solvant aprotique est choisi dans le groupe (I) formé par les alkylsulfoxydes, les lactames, les amides acycliques, les dérivés cycliques de l'urée substitués par le méthyle sur l'azote, les lactames et les amides acycliques pouvant être, ou non, substitués, et

- le constituant non solvant est choisi dans le groupe (II) formé par l'eau et les alcools.

3. Composition selon la revendication 2, caractérisée en ce que le constituant solvant aprotique est le diméthylsulfoxyde.

4. Composition selon la revendication 2, caractérisée en ce que les alcools du groupe (II) sont l'éthylène glycol, le propylène glycol et le glycérol.

5. Composition selon l'une quelconque des revendications 1 à 4, caractérisée en ce que la concentration en formiate de cellulose est au moins égale à 4 % en poids.

6. Composition selon l'une quelconque des revendications 1 à 5, caractérisée en ce que le degré de substitution de la cellulose en groupes formiate est au moins égal à 25 %.

7. Composition selon l'une quelconque des revendications 1 à 6, caractérisée en ce que le degré de polymérisation de la cellulose dans le formiate est au moins égal à 200.

8. Composition selon l'une quelconque des revendications 5 à 7 caractérisée en ce que la concentration en formiate de cellulose est au moins égale à 8 % en poids.

9. Composition selon l'une quelconque des revendications 6 à 8, caractérisée en ce que le degré de substitution de la cellulose en groupes formiate est au moins égal à 30 %.

10. Composition selon l'une quelconque des revendications 7 à 9, caractérisée en ce que le degré de polymérisation de la cellulose, dans le formiate, est au moins égal à 500.

11. Composition selon l'une quelconque des revendications 1 à 10, caractérisée en ce que la teneur relative en constituant(s) (II) dans le système solvant est au moins égale à 15 % en poids.

12. Composition selon la revendication 11, caractérisée en ce que la teneur relative en constituant(s) (II) dans le système solvant est au moins égale à 20 % en poids.

13. Composition selon l'une quelconque des revendications 1 à 12 caractérisée en ce que $T_f$ est supérieure à 50°C.

14. Procédé pour préparer un article en cellulose régénérée, caractérisé par les points suivants :

   a) on transforme la composition conforme à l'une quelconque des revendications 1 à 13 en un objet liquide ayant la forme de l'article désiré, à une température telle que la composition est une solution ;
   b) on effectue une trempe thermique dudit objet liquide, par refroidissement rapide de la solution dans un milieu de gélification dont la température est inférieure à $T_f$, de façon à obtenir un gel élastique et thermoréversible ;
   c) on lave l'article sous forme dudit gel pour enlever la totalité ou la majeure partie du système solvant ;
   d) on régénère la cellulose de l'article ;
   e) on lave et on sèche l'article ainsi régénéré.

15. Procédé selon la revendication 14, caractérisé en ce que la température du milieu de gélification est inférieure d'au moins 50°C à la température $T_f$.

16. Procédé selon la revendication 15, caractérisé en ce que la température du milieu de gélification est inférieure à -10°C.

17. Procédé selon l'une quelconque des revendications 14 à 16, caractérisé en ce que, lors de l'étape a), on transforme la composition en un objet liquide ayant la forme d'une fibre ou d'un film.

18. Procédé selon la revendication 17, caractérisé en ce qu'il est un procédé de filage selon la technique dite "avec couche de fluide non coagulante".

19. Procédé selon la revendication 18, caractérisé en ce que le milieu de gélification est un liquide non miscible, ou quasiment pas miscible avec le système solvant.

20. Fibre ou film en cellulose régénérée dont le degré de substitution en groupes formiate est compris entre 0% et 5%, susceptible d'être obtenu(e) selon un procédé conforme à l'une quelconque des revendications 17 à 19.

21. Fibre en cellulose régénérée selon la revendication 20, constituée d'au moins un filament, caractérisée en ce qu'elle a les propriétés suivantes:

   - le filament a, en section transversale, une morphologie pratiquement continue de la périphérie jusqu'au coeur;

   - le filament ne fibrille pas;

   - la fibre a un module initial au moins égal à 500 cN/tex, un allongement à la rupture au moins égal à 5 % et une ténacité au moins égale à 15 cN/tex.

22. Fibre selon la revendication 21, caractérisée en ce qu'elle est une fibre monofilamentaire dont le diamètre est supérieur à 40 μm et dont le titre est supérieur à 2,0 tex.

23. Fibre selon la revendication 22, caractérisée en ce que son diamètre est au moins égal à 100 micromètres et son titre est au moins égal à 11,5 tex.

24. Fibre selon l'une quelconque des revendications 21 à 23, caractérisée en ce que sa ténacité est au moins égale à 20 cN/tex.

25. Fibre selon l'une quelconque des revendications 21 à 24, caractérisée en ce que son allongement à la rupture est au moins égal à 10 %.

26. Fibre selon la revendication 25, caractérisée en ce que son allongement à la rupture est au moins égal à 15 %.

27. Assemblage de renforcement comportant au moins une fibre et/ou un film conformes à l'une quelconque des revendications 20 à 26.

28. Article renforcé par au moins une fibre et/ou un film conformes à l'une quelconque des revendications 20 à 26, et/ou par au moins un assemblage conforme à la revendication 27.

29. Article renforcé selon la revendication 28, caractérisé en ce qu'il est une enveloppe de pneumatique.

**Claims**

1. A composition based on cellulose formate and a solvent system for this formate, characterised by the following features:

   a) the solvent system is formed from at least one constituent (I) which is an aprotic solvent for cellulose formate and of at least one constituent (II) which is a non-solvent for cellulose formate, the amount of said non-solvent, or of the totality of said non-solvents, being at least equal to 10% by weight and at most equal to 40% by weight of the total weight of the solvent system;
   b) at ambient temperature, the composition is an elastic, thermoreversible gel;
   c) at a temperature at least equal to the gel melting temperature noted $T_f$, the composition is a spinnable solution.

2. A composition according to claim 1, characterised in that:

   - the aprotic solvent constituent is selected from the group (I) comprising alkyl sulphoxides, lactams, acyclic amides and cyclic derivatives of urea having a methyl substituent on the nitrogen, wherein the lactams and acyclic amides may be substituted or unsubstituted, and
   - the non-solvent constituent is selected from the group (II) comprising water and alcohols.

3. A composition according to claim 2, characterised in that the aprotic solvent constituent is dimethyl sulphoxide.

**4.** A composition according to claim 2, characterised in that the alcohols of group (II) are ethylene glycol, propylene glycol and glycerol.

**5.** A composition according to any one of claims 1 to 4, characterised in that the concentration of cellulose formate is at least equal to 4% by weight.

**6.** A composition according to any one of claims 1 to 5, characterised in that the degree of substitution of the cellulose by formate groups is at least equal to 25%.

**7.** A composition according to any one of claims 1 to 6, characterised in that the degree of polymerisation of the cellulose in the formate is at least equal to 200.

**8.** A composition according to any one of claims 5 to 7, characterised in that the concentration of cellulose formate is at least equal to 8% by weight.

**9.** A composition according to any one of claims 6 to 8, characterised in that the degree of substitution of the cellulose by formate groups is at least equal to 30%.

**10.** A composition according to any one of claims 7 to 9, characterised in that the degree of polymerisation of the cellulose in the formate is at least equal to 500.

**11.** A composition according to any one of claims 1 to 10, characterised in that the relative amount of constituent(s) (II) in the solvent system is at least equal to 15% by weight.

**12.** A composition according to claim 11, characterised in that the relative amount of constituent(s) (II) in the solvent system is at least equal to 20% by weight.

**13.** A composition according to any one of claims 1 to 12, characterised in that $T_f$ is greater than 50°C.

**14.** A process for preparing a regenerated cellulose article, characterised by the following features:

a) the composition according to any one of claims 1 to 13 is transformed into a liquid object having the shape of the desired article at a temperature such that the composition is a solution;
b) said liquid object is subjected to thermal quenching by rapid cooling of the solution in a medium of gelation, the temperature of which is less than $T_f$, so as to obtain an elastic, thermoreversible gel;
c) the article is washed in the form of said gel to remove the whole or the major part of the solvent system;
d) the cellulose of the article is regenerated;
e) the article which is thus regenerated is washed and dried.

**15.** A process according to claim 14, characterised in that the temperature of the medium of gelation is less than the temperature $T_f$ by at least 50°C.

**16.** A process according to claim 15, characterised in that the temperature of the medium of gelation is less than -10°C.

**17.** A process according to any one of claims 14 to 16, characterised in that during step a) the composition is transformed into a liquid object having the shape of a fibre or a film.

**18.** A process according to claim 17, characterised in that it is a spinning process based on what is termed the "non-coagulant fluid layer" technique.

**19.** A process according to claim 18, characterised in that the medium of gelation is a liquid which is immiscible or almost immiscible with the solvent system.

**20.** A fibre or film of regenerated cellulose, the degree of substitution by formate groups of which is between 0% and 5%, obtainable by a process according to any one of claims 17 to 19.

**21.** A regenerated cellulose fibre according to claim 20, consisting of at least one filament, characterised in that it has the following properties:

- the filament has a morphology in cross-section which is practically continuous from the periphery to the core;
- the filament does not fibrillate;
- the fibre has an initial modulus at least equal to 500 cN/tex, an elongation at break at least equal to 5% and a tenacity at least equal to 15 cN/tex.

22. A fibre according to claim 21, characterised in that it is a monofilament fibre, the diameter of which is greater than 40 $\mu$m, and the linear density of which is greater than 2.0 tex.

23. A fibre according to claim 22, characterised in that its diameter is at least equal to 100 micrometres and its linear density is at least equal to 11.5 tex.

24. A fibre according to any one of claims 21 to 23, characterised in that its tenacity is at least equal to 20 cN/tex.

25. A fibre according to any one of claims 21 to 24, characterised in that its elongation at break is at least equal to 10%.

26. A fibre according to claim 25, characterised in that its elongation at break is at least equal to 15%.

27. A reinforcement assembly comprising at least one fibre and/or one film according to any one of claims 20 to 26.

28. An article reinforced by at least one fibre and/or one film according to any one of claims 20 to 26, and/or by at least one assembly according to claim 27.

29. A reinforced article according to claim 28, characterised in that it is a tyre.

**Patentansprüche**

1. Zusammensetzung auf der Basis von Celluloseformiat und eines Lösungsmittelsystems für das Celluloseformiat, gekennzeichnet durch folgende Merkmale:

    a) das Lösungsmittelsystem besteht aus mindestens einem aprotischen Lösungsmittelbestandteil (I), der ein aprotisches Lösungsmittel für das Celluloseformiat darstellt, und mindestens einem Nichtlösungsmittelbestandteil (II), der kein Lösungsmittel für das Celluloseformiat ist, wobei die Menge dieses Nichtlösungsmittels oder der Gesamtheit der Nichtlösungsmittel mindestens 10 Gew. -% und höchstens 40 Gew.-% beträgt, bezogen auf das Gesamtgewicht des Lösungsmittelsystems;
    b) die Zusammensetzung stellt bei Umgebungstemperatur ein elastisches und thermoreversibles Gel dar;
    c) die Zusammensetzung ist bei einer Temperatur, die mindestens gleich der Schmelztemperatur Tf des Gels ist, eine verspinnbare Lösung.

2. Zusammensetzung nach Anspruch 1,
    dadurch gekennzeichnet, daß

    - der aprotische Lösungsmittelbestandteil (I) ausgewählt ist unter Alkylsulfoxiden, Lactamen, acyclischen Amiden, cyclischen Harnstoffderivaten, die am Stickstoff mit Methyl substituiert sind, Lactamen und acyclischen Amiden, die jeweils gegebenenfalls substituiert sind, und
    - der Nichtlösungsmittelbestandteil (II) unter Wasser und Alkoholen ausgewählt ist.

3. Zusammensetzung nach Anspruch 2,
    dadurch gekennzeichnet, daß
    der aprotische Lösungsmittelbestandteil Dimethylsulfoxid ist.

4. Zusammensetzung nach Anspruch 2,
    dadurch gekennzeichnet, daß
    die Alkohole der Gruppe der Nichtlösungsmittelbestandteile (II) Ethylenglykol, Propylenglykol und Glycerin sind.

5. Zusammensetzung nach einem der Ansprüche 1 bis 4,
    dadurch gekennzeichnet, daß
    die Konzentration an Celluloseformiat mindestens 4 Gew.-% beträgt.

**6.** Zusammensetzung nach einem der Ansprüche 1 bis 5,
dadurch gekennzeichnet, daß
der Substitutionsgrad der Cellulose, bezogen auf Formiatgruppen, mindestens 25 % beträgt.

**7.** Zusammensetzung nach einem der Ansprüche 1 bis 6,
dadurch gekennzeichnet, daß
der Polymerisationsgrad der Cellulose im Celluloseformiat mindestens 200 beträgt.

**8.** Zusammensetzung nach einem der Ansprüche 5 bis 7,
dadurch gekennzeichnet, daß
die Konzentration an Celluloseformiat mindestens 8 Gew. -% beträgt.

**9.** Zusammensetzung nach einem der Ansprüche 6 bis 8,
dadurch gekennzeichnet, daß der Substitutionsgrad der Cellulose, bezogen auf Formiatgruppen, mindestens 30 %
beträgt.

**10.** Zusammensetzung nach einem der Ansprüche 7 bis 9,
dadurch gekennzeichnet, daß
der Polymerisationsgrad der Cellulose im Celluloseformiat mindestens 500 beträgt.

**11.** Zusammensetzung nach einem der Ansprüche 1 bis 10,
dadurch gekennzeichnet, daß
der relative Mengenanteil an Nichtlösungsmittelbestandteil(en) (II) im Lösungsmittelsystem mindestens 15 Gew.-% beträgt.

**12.** Zusammensetzung nach Anspruch 11,
dadurch gekennzeichnet, daß
der relative Mengenanteil an Nichtlösungsmittelbestandteil(en) (II) im Lösungsmittelsystem mindestens 20 Gew.-% beträgt.

**13.** Zusammensetzung nach einem der Ansprüche 1 bis 12,
dadurch gekennzeichnet, daß
die Schmelztemperatur Tf oberhalb von 50 °C liegt.

**14.** Verfahren zur Herstellung von Gegenständen aus Regeneratcellulose,
gekennzeichnet durch folgende Stufen:

a) Umwandlung einer Zusammensetzung nach einem der Ansprüche 1 bis 13 in ein flüssiges Objekt, das die Form des gewünschten Gegenstands besitzt;
b) thermisches Abschrecken des flüssigen Objekts durch rasches Abkühlen der Lösung in einem Gelbildungsmedium, dessen Temperatur unterhalb der Temperatur Tf liegt, unter Erhalt eines elastischen, thermoreversiblen Gels;
c) Waschen des Gegenstands in Form des Gels zur Entfernung der Gesamtheit oder des größten Teils des Lösungsmittelsystems;
d) Regenerieren der Cellulose des Gegenstands;
e) Waschen und Trocknen des so regenerierten Gegenstands.

**15.** Verfahren nach Anspruch 14,
dadurch gekennzeichnet, daß
die Temperatur des Gelbildungsmediums um mindestens 50 °C niedriger ist als die Temperatur Tf.

**16.** Verfahren nach Anspruch 15,
dadurch gekennzeichnet, daß
die Temperatur des Gelbildungsmediums unter -10 °C liegt.

**17.** Verfahren nach einem der Ansprüche 14 bis 16,
dadurch gekennzeichnet, daß
die Zusammensetzung in Stufe a) in ein flüssiges Objekt umgewandelt wird, das die Form einer Faser oder eines Films besitzt.

18. Verfahren nach Anspruch 17,
dadurch gekennzeichnet, daß
es ein Verfahren zum Verspinnen nach der als "Verspinnen mit nichtkoagulierender flüssiger Schicht" bezeichneten Methode darstellt.

19. Verfahren nach Anspruch 18,
dadurch gekennzeichnet, daß
das Gelbildungsmedium eine mit dem Läsungsmittelsystem nicht mischbare oder quasi nicht mischbare Flüssigkeit darstellt.

20. Faser oder Film aus Regeneratcellulose, deren Substitutionsgrad, bezogen auf Formiatgruppen, zwischen 0 und 5 % liegt, erhältlich nach einem Verfahren nach einem der Ansprüche 17 bis 19.

21. Faser aus Regeneratcellulose nach Anspruch 20, die aus mindestens einem Filament besteht, dadurch gekennzeichnet, daß sie folgende Eigenschaften aufweist:

- das Filament weist im Querschnitt eine vom Umfang bis zum Kern praktisch kontinuierliche Morphologie auf;
- das Filament fibrilliert nicht;
- die Faser weist einen anfangsbezogenen Modul von mindestens 500 cN/tex, eine Bruchdehnung von mindestens 5 % und eine Bruchfestigkeit von mindestens 15 cN/tex auf.

22. Faser nach Anspruch 21,
dadurch gekennzeichnet, daß
es sich um eine monofilamentäre Faser handelt, deren Durchmesser mehr als 40 μm und deren längenbezogene Masse mehr als 2,0 tex betragen.

23. Faser nach Anspruch 22,
dadurch gekennzeichnet, daß
ihr Durchmesser mindestens 100 μm und ihre längenbezogene Masse mindestens 11,5 tex betragen.

24. Faser nach einem der Ansprüche 21 bis 23,
dadurch gekennzeichnet, daß
ihre Bruchfestigkeit mindestens 20 cN/tex beträgt.

25. Faser nach einem der Ansprüche 21 bis 24,
dadurch gekennzeichnet, daß
ihre Bruchdehnung mindestens 10 % beträgt.

26. Faser nach Anspruch 25,
dadurch gekennzeichnet, daß
ihre Bruchdehnung mindestens 15 % beträgt.

27. Anordnung für Verstärkungszwecke, die mindestens eine Faser und/oder mindestens einen Film nach einem der Ansprüche 20 bis 26 aufweist.

28. Gegenstand, der mit mindestens einer Faser und/oder mindestens einem Film gemäß einem der Ansprüche 20 bis 26 und/oder mindestens einer Anordnung für Verstärkungszwecke nach Anspruch 27 verstärkt ist.

29. Gegenstand nach Anspruch 28,
dadurch gekennzeichnet, daß
er einen Luftreifen darstellt.